# EUROPÄISCHE PATENTSCHRIFT

(11) **EP 2 424 764 B1**
(45) Veröffentlichungstag und Bekanntmachung des Hinweises auf die Patenterteilung: **04.06.2014**
(21) Anmeldenummer: 10708200.0
(22) Anmeldetag: 11.03.2010
(51) Int. Cl.: B62D 5/04, F16C 17/20

(54) **SERVOLENKUNG FÜR EIN KRAFTFAHRZEUG**
POWER STEERING FOR A MOTOR VEHICLE
DIRECTION ASSISTÉE POUR UN VÉHICULE AUTOMOBILE

(30) Priorität: 27.04.2009 DE 102009002660
(43) Veröffentlichungstag der Anmeldung: 07.03.2012
(73) Patentinhaber: ZF-Lenksysteme GmbH, 73527 Schwäbisch Gmünd (DE)
(72) Erfinder: BUDAKER, Martin, 73540 Heubach (DE); WANNER, Stephan, 73527 Schwäbisch Gmünd (DE); RUPP, Arthur, 73460 Hüttlingen (DE)
(86) Internationale Anmeldenummer: PCT/EP2010/053101
(87) Internationale Veröffentlichungsnummer: WO 2010/124898

(56) Entgegenhaltungen:
- EP-A1- 2 039 588
- WO-A1-01/40046
- DE-A1- 19 947 510
- DE-A1-102007 012 655

## Beschreibung

Die Erfindung betrifft eine Servolenkung für ein Kraftfahrzeug mit einem Gehäuse, in welchem eine Lenkstange axial beweglich gehalten ist, gemäß dem Oberbegriff von Anspruch 1.

Eine gattungsgemäße Servolenkung ist aus der DE 103 10 492 A1 bekannt.

Aus dem Stand der Technik sind eine Vielzahl von Servolenkungen bekannt, bei denen eine Lenkstange bzw. eine Zahnstange axial beweglich in einem Gehäuse gelagert ist, wobei die Lenkstange einen Spindelabschnitt aufweist, der zusammen mit einer drehbar gelagerten Kugelumlaufmufter ein Kugelmutter-Spindel-Getriebes bildet.

Die DE 103 10 492 A1 beschreibt eine Servolenkung mit einem Kugelmutter-Spindel-Getriebe am Beispiel einer elektrischen Servolenkung, bei der die Kugelumlaufmutter über ein mit einem Elektromotor verbundenes Riemengetriebe angetrieben wird. Die gattungsgemäße elektrische Servolenkung weist ein Gehäuse auf, in welchem die mit einem Spindelabschnitt versehene Lenkstange axial beweglich gehalten ist. Die Lenkstange bildet gemeinsam mit einer Kugelumlaufmutter ein Kugelmutter-Spindel-Getriebe. Achsparallel zu der Lenkstange ist ein Elektromotor angeordnet, welcher mittels eines Zugmittelgetriebes, beispielsweise eines Riemengetriebes, eine Kraft auf die Kugelumlaufmutter überträgt. Das Zugmittelgetriebe weist in bekannter Weise eine dem Elektromotor zugeordnete Antriebsscheibe und eine der Kugelumlaufmutter zugeordnete Abtriebsscheibe auf, welche über ein Zugmittel, vorliegend einen Riemen, antriebsmäßig miteinander verbunden sind. Durch das Kugelmutter-Spindel-Getriebe wird die Rotationsbewegung des Elektromotors in eine Axialbewegung der Lenkstange umgesetzt, wodurch die Lenkstange in Abhängigkeit der Drehrichtung des Elektromotors entsprechend axial in der Gehäuseeinheit bzw. dem Lenkgetriebegehäuse verschoben wird. Durch die Axialverschiebung der Lenkstange werden ebenfalls in bekannter Weise Fahrzeugräder eines Kraftfahrzeugs, welche mit der Lenkstange beispielsweise über Spurstangen verbunden sind, ausgelenkt.

Bei herkömmlichen Servolenkungen wird die Bewegungs- und Kraftübertragung von dem Kugelmutter-Spindel-Getriebe bzw. der Lenkstange auf die zu lenkenden Räder von Spurstangen übernommen. Diese Spurstangen verlaufen üblicherweise nicht parallel zu der Achse der Kugelumlaufmutter bzw. der Lenkstange, sondern weisen gegenüber derselben einen Knickwinkel auf. Durch unterschiedliche Fahrzustände bzw. Fahrsituationen werden über die Spurstangen unterschiedliche Kräfte in die Lenkstange eingeleitet, die sich aufgrund des Winkels der Spurstangen gegenüber der Zahnstange in radiale und axiale Kraftkomponenten aufteilen. Diese Kräfte können zu einer Verbiegung der Lenkstangen führen.

Aus der DE 10 2005 040 154 A1 ist es bekannt, die Kugelumlaufmutter über ein spezielles Lager mit dem Gehäuse zu verbinden, so dass die Verbiegung zwischen der Kugelmutter und der Lenkstange reduziert wird.

Die DE 102007012655 A1 beschreibt die Merkmale des Oberbegriffs des unabhängigen Anspruchs 1.

Es besteht bei herkömmlichen Lenk- bzw. Zahnstangen das Problem, dass aufgrund der Biegebeanspruchung eine plastische Verformung der Lenkstange auftreten kann. Eine Abstützung der Lenkstange ist problematisch, weil eine zylindrische Abstütz- bzw. Lagerbuchse die Gewindegänge der Lenkstange, d. h. den Spindelabschnitt, beschädigt würde. Dies deshalb, da, wenn die Lenkstange ausgelenkt bzw. verbogen wird, sich diese an die zylindrische Lagerbuchse anlegt bzw. mit den Gewindegängen in Kontakt mit der Lagerbuchse kommt. Dies kann zu einem Verschleiß an der Lenkstange und/oder der Lagerbuchse führen. Dadurch wird die Lenkstange und/oder die Lagerbuchse beschädigt und somit die Funktion des Lenkgetriebes beeinträchtigt. Des weiteren besteht die Gefahr, dass sich die Zahnstange durch ihre Gewindegänge (Spindel) in die zylindrische Lagerbuchse einhakt.

Der vorliegenden Erfindung liegt die Aufgabe zugrunde, einen Verschleiß und eine plastische Verformung der Lenkstange weitgehend zu vermeiden.

Diese Aufgabe wird erfindungsgemäß durch Anspruch 1 gelöst.

Durch die erfindungsgemäße Lager- bzw. Abstützbuchse wird eine plastische Verformung der Zahnstange bzw. Lenkstange zuverlässig vermieden. Dadurch, dass sich der Öffnungsquerschnitt der Durchgangsbohrung der Abstützbuchse in Richtung auf das Ende der Lenkstange vergrößert und die Kurvenkontur derart an eine Biegelinie der Lenkstange angepasst ist, dass die Lenkstange, wenn diese aufgrund einer Biegebelastung die Abstützbuchse kontaktiert, flächig an deren Kurvenkontur anliegt, wird zuverlässig vermieden, dass die Lenkstange und/oder die Abstützbuchse durch die Kontaktierung beschädigt wird bzw. dort Verschleiß auftritt. Die erfindungsgemäße Lösung vermeidet aufgrund der Kurvenkontur (Biegekurvenkontur) eine Linienkontaktierung der Lenkstange an der Abstützbuchse, so dass die Probleme, die bei einer zylindrischen Lagerbuchse entstehen würde, vermieden werden.

Der Verlauf der Kurvenkontur der Abstützbuchse kann an die jeweils zugeordnete Lenkstange angepasst sein. Einfluss auf die Biegelinie der Lenkstange und somit auch auf die Kurvenkontur der Abstützbuchse haben unter anderem der Lenkstangendurchmesser, die Lenkstangenform, das Lenkstangenrnaterial und dergleichen. Des weiteren hängt die Kurvenkontur davon ab, an welcher Stelle die Abstützbuchse zwischen der Kugelumlaufmutter und dem Ende der Lenkstange angeordnet wird. Die sich daraus ergebende Kurvenkontur der Abstützbuchse kann verhältnismäßig einfach berechnet werden. Die Kurvenkontur der Abstützbuchse muss nicht zwangsläufig einen gleichmäßig Verlauf aufweisen. Die Kurvenkontur kann eine beliebige mathematische Struktur sein, welche die Biegekurve der Lenkstange in dem Bereich nachbildet, mit dem die Lenkstange an der Abstützbuchse anliegt - wenn die Lenkstange aufgrund einer Biegebeanspruchung entsprechend verbogen ist.

Da die Biegelinie der Lenkstange von deren Eigenschaften abhängt und zudem der daran anzupassenden Verlauf der Kurvenkontur der Abstützbuchse auch noch von der Anordnung der Abstützbuchse und gegebenenfalls der Querschnittsfläche bzw. dem Öffnungsquerschnitt der Durchgangsbohrung abhängt, muss für jeden Lenkstangentyp eine individuelle Berechnung vorgenommen werden.

Von Vorteil ist es, wenn sich die Durchgangsbohrung in Richtung auf das Ende der Lenkstange trichterförmig, vorzugsweise gleichmäßig trichterförmig, öffnet. Dies ermöglicht eine einfache Herstellung der Abstützbuchse. Ein vorzugsweise gleichmäßiges trichterförmiges Öffnen ist jedoch nicht zwingend notwendig. Vielmehr ist es auch vorstellbar, dass die Lenkstange bei einer Verbiegung in verschiedene radiale Richtungen unterschiedliche Biegelinien aufweist und es daher vorteilhaft ist, wenn auch die Abstützbuchse in verschiedene radiale Richtungen eine unterschiedliche Kurvenkontur aufweist.

Erfindungsgemäß kann vorgesehen sein, dass die Kurvenkontur an eine Extrem-Biegelinie der Lenkstange angepasst ist, welche sich bei einer maximal zulässigen, radialen Krafteinwirkung auf das Ende der Lenkstange einstellt.

Die maximal zulässige, radiale Krafteinwirkung kann für den jeweiligen fahrzeugspezifischen Fall vorzugsweise individuell dadurch ermittelt werden, dass die maximale Hebellänge (maximaler Hub), ausgehend von der Lagerstelle der Kugelumlaufmutter bis zu dem Ende der Lenkstange und die maximale Krafteinwirkung (z. B. beim Bordsteinabdrücken) ermittelt wird. Beachtet werden sollte dabei, dass die maximale Auslenkung der Lenkstange die Elastizitätsgrenze der Lenkstange nicht überschreitet. Bei einer Auslegung der Kurvenkontur angepasst an die Extrem-Biegelinie wird sichergestellt, dass die Lenkstange dann an der Kurvenkontur der Abstützbuchse anliegt, wenn die Extrem-Biegelinie der Lenkstange erreicht wird. Eine plastische Verformung der Lenkstange wird durch das Anliegen an der Kurvenkontur vermieden.

Wird die Lenkstange nicht bei der maximalen Hebellänge (d. h. dem maximalen Hub), sondern an einer beliebigen Position mit maximaler Krafteinwirkung beansprucht, so verbiegt sich die Lenkstange, aufgrund der verkürzten Hebellänge weniger stark als bei der maximalen Hebellänge. Dadurch wird gewährleistet, dass sich die Lenkstange nicht an der Abstützbuchse abstützt. Die Funktion der Abstützbuchse tritt durch die Anpassung der Kurvenkontur an die Extrem-Biegelinie nur dann ein, wenn tatsächlich die maximale Krafteinwirkung an der maximalen Hebellänge, d. h. am Ende der Lenkstange, einwirkt.

Von Vorteil ist es, wenn die Durchgangsbohrung der Abstützbuchse und die Anordnung der Abstützbuchse zwischen der Kugelumlaufmutter und dem Ende der Lenkstange so gewählt ist, dass die Lenkung erst beim Erreichen der Extrem-Biegelinie an der Kurvenkontur der Abstützbuchse flächig anliegt.

Von Vorteil ist es ferner, wenn die Durchgangsbohrung der Abstützbuchse am Eingang und/oder Ausgang einen zusätzliche Radius aufweiset, der kleiner ist als der Radius der Kurvenkontur.

Dies hat den Vorteil, dass sich die Lenkstange nicht im Eingangs- oder Ausgangsbereich der Abstützbuchse einhaken kann. Anstelle eines Radius kann auch eine Anschrägung oder dergleichen vorgesehen sein. Ein Einhaken am Eingangsbereich oder am Ausgangsbereich der Abstützbuchse wird vorzugsweise dadurch vermieden, dass die Kurvenkontur in diesen Bereichen verstärkt wird, d. h. der Kurvenradius kleiner ist.

Erfindungsgemäß kann vorgesehen sein, dass die Abstützbuchse einteilig oder aber auch mehrteilig ausgebildet ist.

Erfindungsgemäß kann vorgesehen sein, dass die Abstützbuchse wenigstens aus zwei Teilen gebildet ist. Ein Teil der Abstützbuchse kann dabei als Einlegeteil bzw. Adapter und ein anderes Teil der Abstützbuchse als Abstützbacke ausgebildet sein. Dabei kann das Einlegeteil einen Außendurchmesser aufweisen, der es ermöglicht, dass das Einlegeteil in dem Gehäuse, welches die Lenkstange umgibt, positioniert werden kann. D. h. der Außendurchmesser des Einlegeteils ist an den Innendurchmesser des Bereiches des Gehäuses angepasst, in dem die Abstützbuchse positioniert werden soll. Das Einlegeteil weist einen vorzugsweise zylindrischen Innendurchmesser auf, der an den Außendurchmesser der Abstützbacke angepasst ist, so dass die Abstützbacke in dem Einlegeteil positioniert und fixiert werden kann. Die Abstützbacke weist an ihrer Innenseite die erfindungsgemäße Kurvenkontur auf. Die beschriebene mehrteilige Ausbildung der Abstützbuchse hat den Vorteil, dass das Einlegeteil als Standardteil hergestellt werden kann. Dadurch kann das Einlegeteil für verschiedene Typen von Lenkstangen unverändert eingesetzt werden. Fahrzeugspezifisch ausgelegt bzw. angepasst an die jeweilige Lenkstange muss lediglich die Abstützbacke der Abstützbuchse sein. Dadurch können die Herstellungskosten der Abstützbuchse reduziert werden.

Erfindungsgemäß kann ferner vorgesehen sein, dass die Abstützbuchse mit dem Gehäuse einstückig ist. Die Abstützbuchse kann durch einen Teilbereich des Gehäuses ausgebildet sein. Dabei kann vorgesehen sein, dass die Abstützbuchse bzw. deren Kurvenkontur durch Drehen bzw. Abdrehen in die Innenfläche des Gehäuses eingebracht ist.

Von Vorteil ist es, wenn die Abstützbuchse aus einem verschleißfesten Material gebildet ist. Die Abstützbuchse kann vorzugsweise aus Kunststoff oder Metall, beispielsweise Stahl, gebildet sein.

Eine Abstützbuchse für eine Servolenkung eines Kraftfahrzeugs ergibt sich ferner aus Anspruch 13.

Vorteilhafte Ausgestaltungen und Weiterbildungen ergeben sich aus den weiteren abhängigen Ansprüchen. Nachfolgend ist anhand der Zeichnung ein Ausführungsbeispiel der Erfindung prinzipmäßig dargestellt.

Es zeigt:
Fig. 1 eine prinzipmäßige Darstellung einer Servolenkung anhand einer elektrischen Servolenkung mit einer Lenkstange, einem Ritzel mit Drehmomentsensor, einem Elektromotor und einer Getriebeeinrichtung;
Fig. 2 einen prinzipmäßigen Längsschnitt durch eine elektrische Servolenkung entlang der Lenkstangenachse ohne eine Darstellung der erfindungsgemäßen Abstützbuchse;
Fig. 3 eine prinzipmäßige Darstellung der maximalen Auslenkung bzw. Durchbiegung einer Lenkstange;
Fig. 4 eine prinzipmäßige Darstellung einer Auslenkung der Lenkstange vor Erreichen der maximalen Auslenkung;
Fig. 5 eine prinzipmäßige Darstellung einer erfindungsgemäßen Abstützbuchse mit einem möglichen Verlauf der Kurvenkontur an der Innenfläche der Durchgangsbohrung;
Fig. 6 eine prinzipmäßige Darstellung einer weiteren erfindungsgemäßen Abstützbuchse mit einem möglichen Verlauf der Kurvenkontur an der Innenfläche der Durchgangsbohrung;
Fig. 7 eine Darstellung einer Abstützbuchse in einer zweiteiligen Ausführung; und
Fig. 8 eine Darstellung einer weiteren Abstützbuchse in einer zweiteiligen Ausführung.

Servolenkungen für Kraftfahrzeuge sind aus dem allgemeinen Stand der Technik hinlänglich bekannt, wozu beispielsweise auf die DE 103 10 492 A1 verwiesen wird, weshalb nachfolgend nur auf die für die Erfindung wesentlichen Merkmale näher eingegangen wird.

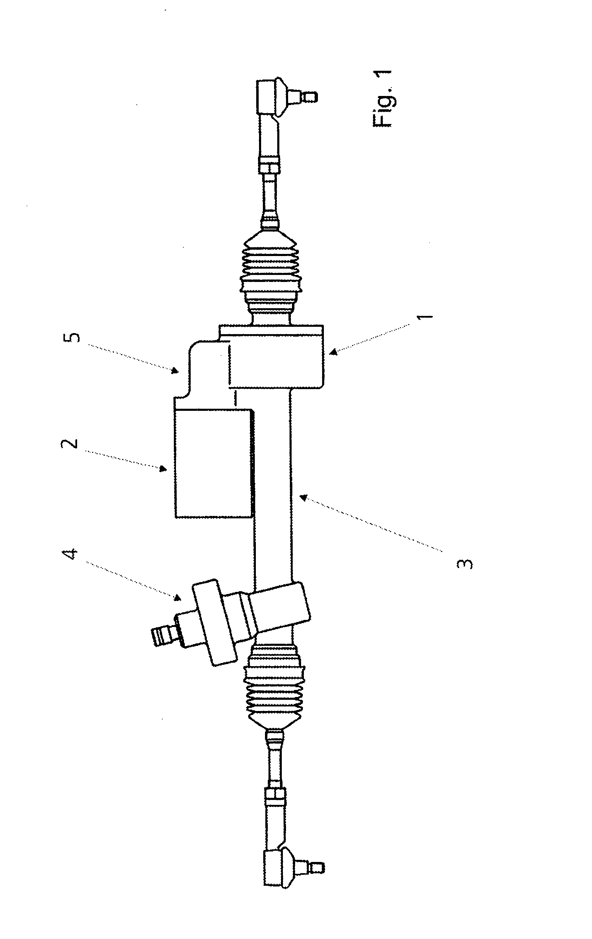

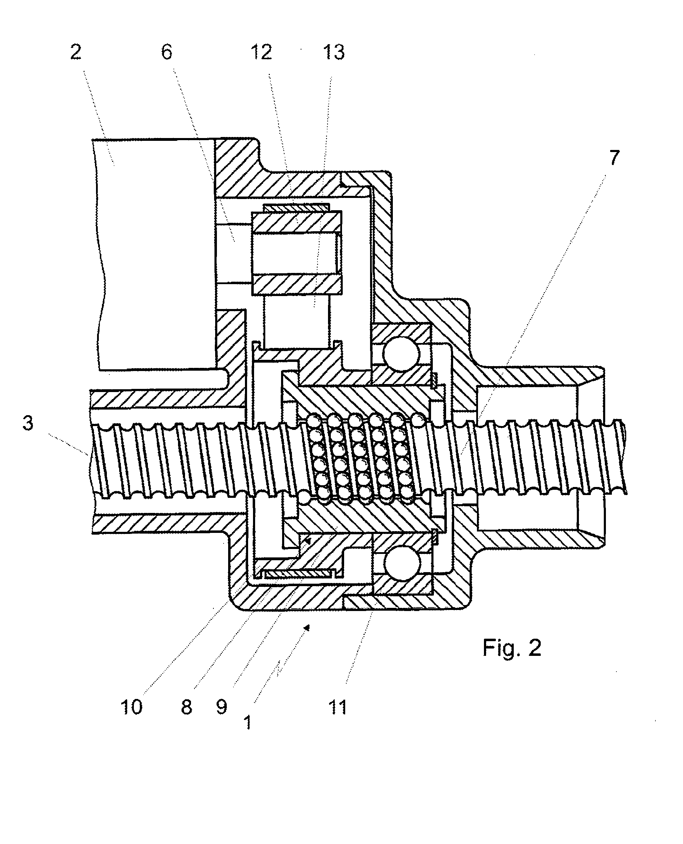

Fig. 1 zeigt eine Servolenkung für Kraftfahrzeuge mit einem Gehäuse 1, einem Elektromotor 2 und einer Lenkstange 3 zum Auslenken von nicht näher dargestellten Fahrzeugrädern. Des weiteren weist die Servolenkung ein Ritzel mit Drehmomentsensor 4 sowie eine Getriebeeinrichtung 5 auf, mittels der die Lenkstange 3 mit einer in Fig. 2 näher dargestellten Ausgangswelle 6 des Elektromotors 2 antriebsmäßig verbunden ist.

Wie aus Fig. 2 ersichtlich ist, ist die Lenkstange 3 parallel zu dem Elektromotor 2 angeordnet. Die Lenkstange 3 kämmt an einem in Fig. 2 nicht gezeigten Verzahnungsabschnitt mit einem nicht gezeigten Ritzel einer Lenkwelle und weist ein Außengewinde an einem Spindelabschnitt 7 auf. Der Spindelabschnitt 7 der Lenkstange 3 ist Teil eines Kugelmutter-Spindel-Getriebes 8.

Der Spindelabschnitt 7 ist in Eingriff mit einer Kugelumlaufmutter 9, die ebenfalls Teil des Kugelmutter-Spindel-Getriebes 8 ist. Die Kugelumlaufmutter 9 ist axial unbeweglich gelagert und bildet mit der Lenkstange 3 eine Bewegungsschraube. Die Kugelumlaufmutter 9 ist drehfest mit einer Abtriebsscheibe 10 verbunden und über ein Lager 11 in dem Gehäuse 1 gelagert.

Auf der Ausgangswelle 6 des Elektromotors 2 ist eine Antriebsscheibe 12 festgelegt. Ein als Riemen 13 ausgebildetes Zugmittel ist über die Abtriebsscheibe 10 und die Antriebsscheibe 12 gespannt und bildet zusammen mit diesen ein Zugmittelgetriebe. Über das Zugmittelgetriebe wird eine Kraft von dem Elektromotor 2 auf die Kugelumlaufmutter 9 übertragen.

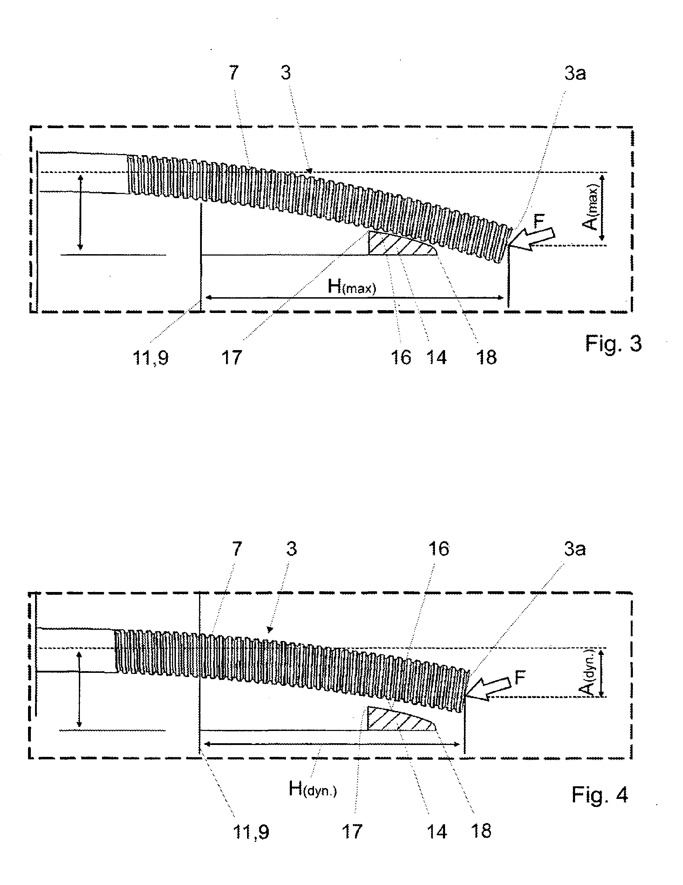

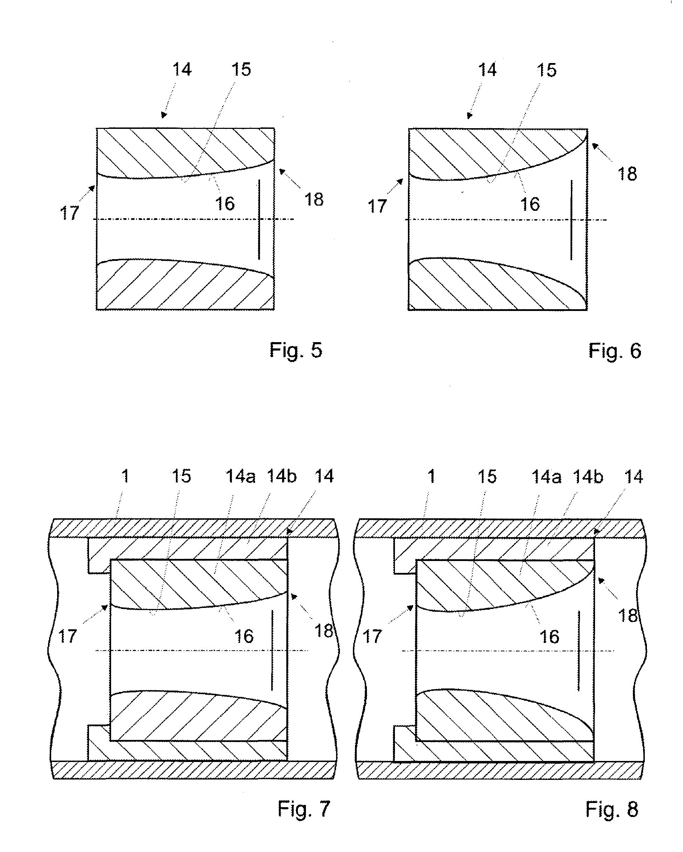

In den Figuren 3 und 4 ist ein Ende der Lenkstange 3 sowie prinzipmäßig die Position der Lagerstelle bzw. das Lager 11 der Kugelumlaufmutter 9 angedeutet. Ferner ist in den Figuren 3 und 4 prinzipmäßig ein Teil einer erfindungsgemäßen Abstützbuchse 14 dargestellt. Die Abstützbuchse 14 ist zwischen einem axialen Ende 3a der Lenkstange 3 und der Kugelumlaufmutter 9 angeordnet bzw. ausgebildet. Eine mögliche Ausgestaltung der Abstützbuchse 14 ist in den Figuren 5 und 6 dargestellt.

Wie sich aus einer Zusammenschau der Figuren 3 bis 6 ergibt, weist die Abstützbuchse 14 eine Durchgangsbohrung 15 zur Durchführung der Lenkstange 3 auf bzw. stellt diese bereit. Die der Lenkstange 3 zugewandte Innenfläche 16 der Abstützbuchse 14 weist eine Kurvenkontur auf. Die Kurvenkontur ist derart ausgebildet, dass sich der Öffnungsquerschnitt der Durchgangsbohrung 15 in Richtung auf das Ende 3a der Lenkstange 3 vergrößert. Die Kurvenkontur ist derart an eine Biegelinie der Lenkstange 3 angepasst, dass die Lenkstange 3, wenn diese aufgrund einer Biegebelastung die Abstützbuchse 14 kontaktiert, flächig an deren Kurvenkontur anliegt. Ein flächiges Anliegen der Lenkstange 3 an der Kurvenkontur der Innenfläche 16 der Abstützbuchse 14 ist in Fig. 3 prinzipmäßig dargestellt. Vorzugsweise liegt die Lenkstange 3 über die gesamte Länge bzw. wenigstens annähernd die gesamte Länge der Abstützbuchse 14 an. Alternativ ist auch nur ein Anliegen über ein Teilstück der Abstützbuchse 14 möglich, so lange gewährleistet ist, dass keine die Gewindegänge der Lenkstange 3 beschädigende Linienberührung auftritt.

Fig. 3 zeigt eine sogenannte Extrem-Biegelinie der Lenkstange 3. Hieran ist die Kurvenkontur der Abstützbuchse 14 im Ausführungsbeispiel angepasst. Hierzu ist für den jeweiligen fahrzeugspezifischen Fall zunächst die Extrem-Biegelinie, d. h. die maximale Auslenkung der Lenkstange 3 zu ermitteln. Die Extrem-Biegelinie wird durch die maximale Hebellänge H(max), d. h. den maximalen Hub und die maximale Krafteinwirkung F, die sich z. B. beim Bordsteinabdrücken ergibt, ermittelt. Die Kraft wird dabei in der Regel von der Spurstange auf die Lenkstange 3 aufgebracht. Hieraus resultiert die maximale Auslenkung A(max). Die maximale Auslenkung A(max) darf die Elastizitätsgrenze der Lenkstange 3 nicht überschreiten, damit eine plastische Verformung vermieden wird. Bevor die plastische Verformung erreicht wird, liegt die Lenkstange 3 an der Kurvenkontur der Innenfläche 16 der Abstützbuchse 14 flächig an, so wie dies in Fig. 3 gezeigt ist.

Fig. 4 zeigt die Lenkstange 3 in einer Position, bevor diese die maximale Auslenkung A(max) erreicht. Diese Position ist in Fig. 4 als dynamische Auslenkung A(dyn) bezeichnet.

Wenn, wie im Ausführungsbeispiel vorgesehen, der Verlauf der Kurvenkontur der Abstützbuchse 14 an die Extrem-Biegelinie, d. h. die maximale Auslenkung A(max) angepasst ist, ist bei einer Auslenkung unterhalb dieses Wertes gewährleistet, dass sich die Lenkstange 3 nicht an der Abstützbuchse 14 abstützt. Fig. 4 zeigt eine dynamische Auslenkung A(dyn) der Lenkstange 3, bei der die Lenkstange 3 an einer Hebellänge H(dyn) mit der maximalen Krafteinwirkung F beansprucht wird. Die Hebellänge H(dyn) ist somit geringer als die maximale Hebellänge H(max), so dass sich die Lenkstange 3 aufgrund der verkürzten Hebellänge nicht so stark durchbiegt, dass die maximale Auslenkung A(max) erreicht wird. Es wird lediglich die Auslenkung A(dyn) erreicht, so dass die Lenkstange 3 nicht an der Abstützbuchse 14 anliegt.

Die Figuren 5 und 6 zeigen zwei mögliche Kurvenkonturen der Innenfläche 16. Die Kurvenkontur, die notwendig ist, dass die Lenkstange 3 flächig an der Kurvenkontur der Abstützbuchse 14 anliegt, wenn die Lenkstange 3 die Abstützbuchse 14 kontaktiert, ergibt sich aus einer Vielzahl von Faktoren, die fahrzeugspezifisch unterschiedlich sind, jedoch berechnet oder durch Versuche ermittelt werden können. Die Kurvenkontur der Innenfläche 15 ergibt sich aus der Biegelinie der Lenkstange 3, die diese aufweist, wenn die Lenkstange 3 die Abstützbuchse 14 kontaktiert. Erreicht werden soll eine Kurvenkontur der Abstützbuchse 14, die es ermöglicht, dass sich die Lenkstange 3 an die Innenfläche 16 der Abstützbuchse 14 anschmiegt, so dass eine flächige Anlage und keine Linienabstützung erfolgt.

Wie sich aus den Figuren 5 und 6 ferner ergibt, weist die Abstützbuchse 14 am Eingang 17 und am Ausgang 18 der Biegekurvenkontur bzw. der Abstützbuchse 14 eine weitere Kurve, im Ausführungsbeispiel einen Radius auf, der kleiner ist als der Radius der Kurvenkontur. Damit wird vermieden, dass die Lenkstange 3 beim Eintritt oder beim Austritt aus der Abstützbuchse 14 einhakt.

Im Ausführungsbeispiel kann vorgesehen sein, dass die Abstützbuchse 14 ein- (Fig. 5 und Fig. 6) oder mehrteilig (Fig. 7 und Fig. 8) ausgebildet ist. Ferner kann in nicht dargestellter Weise auch vorgesehen sein, dass die Abstützbuchse 14 durch Abdrehen direkt in dem Gehäuse 1 ausgebildet ist.

Die Figuren 7 und 8 zeigen eine mögliche zweiteilige Ausführung der Abstützbuchse 14 und deren möglichen Einbau in das Gehäuse 1.

Wie sich aus Fig. 7 und Fig. 8 ergibt, ist die Abstützbuchse 14 hinsichtlich ihrer Funktion in zwei Teile untergliedert, nämlich in eine Abstützbacke 14a und ein Einlegeteil 14b. Die Abstützbacke 14a stellt sicher, dass die Lenkstange 3, wenn diese entsprechend mit einer Biegebelastung beaufschlagt ist, flächig an der Innenseite der Abstützbacke 14a anliegt. Das Einlegeteil 14b gewährleistet eine zuverlässige Positionierung der Abstützbuchse 14 in dem Gehäuse 1, welches die Lenkstange 3 umgibt. Die Zweiteilung der Abstützbuchse 14 hat produktionstechnische Vorteile.

Wie sich aus den Figuren 7 und 8 ergibt, weist das Einlegeteil 14b einen im Wesentlichen zylindrischen Außendurchmesser und einen im Wesentlichen zylindrischen Innendurchmesser auf. Die Abstützbuchse 14 bildet dabei an deren Innenseite einen Anschlag aus, an welchem die Abstützbacke 14a, wenn diese in das Einlegeteil 14b eingebracht ist, anliegt. Die Abstützbacke 14a weist einen zylindrischen Außendurchmesser auf, der im Wesentlichen dem zylindrischen Innendurchmesser des Einlegeteils 14b entspricht, so dass die Abstützbacke 14a in das Einlegeteil 14b eingesetzt und dort fixiert werden kann. Die Innenfläche der Abstützbacke 14a bzw. der Verlauf der Kurvenkontur der Abstützbacken 14a kann an die Biegelinie der jeweiligen Lenkstange 3 angepasst sein.

Der Außendurchmesser des Einlegeteils 14b ist an den Innendurchmesser des die Lenkstange 3 umgebenden Gehäuses 1 angepasst, so dass die Abstützbuchse 14 an der vorgesehenen Position fixiert werden kann. Der Außendurchmesser des Einlegeteils 14b entspricht somit im Wesentlichen dem Innendurchmesser des Gehäuses 1 in diesem Bereich.

Die erfindungsgemäße Lösung ist nicht auf den dargestellten Einsatz der Kugelumlaufmutter 9 bzw. des Kugelmutter-Spindel-Getriebes als Teil einer Servolenkung mit achsparallelem Antrieb beschränkt. Vielmehr lässt sich die erfindungsgemäße Lösung bei beliebigen Kugelmutter-Spindel-Getrieben als Teil einer Servolenkung einsetzen. Die im Ausführungsbeispiel dargestellte Servolenkung mit achsparallelem Antrieb stellt lediglich ein bevorzugtes Einsatzgebiet der erfindungsgemäßen Lösung dar.

### Bezugszeichenliste

- 1: Gehäuse
- 2: Elektromotor
- 3: Lenkstange
- 4: Ritzel mit Drehmomentsensor
- 5: Getriebeeinrichtung
- 6: Ausgangswelle
- 7: Spindelabschnitt
- 8: Kugelmutter-Spindel-Getriebe
- 9: Kugelumlaufmutter
- 10: Abtriebsscheibe
- 11: Lager
- 12: Antriebsscheibe
- 13: Riemen (Zugmittel)
- 14: Abstützbuchse
- 14a: Abstützbacke
- 14b: Einlegeteil
- 15: Durchgangsbohrung
- 16: Innenfläche
- 17: Eingang
- 18: Ausgang

## Patentansprüche

1. Servolenkung für ein Kraftfahrzeug mit einem Gehäuse, in welchem eine Lenkstange axial beweglich gehalten ist, wobei die Lenkstange einen Spindelabschnitt aufweist, der zusammen mit einer drehbar gelagerten Kugelumlaufmutter ein Kugelmutter-Spindel-Getriebe bildet, wobei zwischen einem axialen Ende (3a) der Lenkstange (3) und der Kugelumlaufmutter (9) eine Abstützbuchse (14) ausgebildet ist, die eine Durchgangsbohrung (15) zur Durchführung der Lenkstange (3) bereitstellt, **dadurch gekennzeichnet, dass** die der Lenkstange (3) zugewandte Innenfläche (16) der Abstützbuchse (14) eine Kurvenkontur derart aufweist, dass sich der Öffnungsquerschnitt der Durchgangsbohrung (15) in Richtung auf das Ende (3a) der Lenkstange (3) vergrößert und die Kurvenkontur derart an eine Biegelinie der Lenkstange (3) angepasst ist, dass die Lenkstange (3), wenn diese aufgrund einer Biegebelastung die Abstützbuchse (14) kontaktiert, flächig an deren Kurvenkontur anliegt.

2. Servolenkung nach Anspruch 1, **dadurch gekennzeichnet, dass** die Kurvenkontur an eine Extrem-Biegelinie der Lenkstange (3) angepasst ist, welche sich bei einer maximal zulässigen, radialen Krafteinwirkung auf das Ende (3a) der Lenkstange (3) einstellt.

3. Servolenkung nach Anspruch 2, **dadurch gekennzeichnet, dass** die Durchgangsbohrung (15) der Abstützbuchse (14) und die Anordnung der Abstützbuchse (14) zwischen der Kugelumlaufmutter (9) und dem Ende (3a) der Lenkstange (3) so gewählt ist, dass die Lenkstange (3) erst beim Erreichen der Extrem-Biegelinie an der Kurvenkontur der Abstützbuchse (14) flächig anliegt.

4. Servolenkung nach Anspruch 1, 2 oder 3, **dadurch gekennzeichnet, dass** die Durchgangsbohrung (15) der Abstützbuchse (14) am Eingang und/oder Ausgang einen zusätzlichen Radius aufweist, der kleiner ist als der Radius der Kurvenkontur.

5. Servolenkung nach einem der Ansprüche 1 bis 4, **dadurch gekennzeichnet, dass** sich die Durchgangsbohrung (15) in Richtung auf das Ende (3a) der Lenkstange (3) trichterförmig öffnet.

6. Servolenkung nach einem der Ansprüche 1 bis 5, **dadurch gekennzeichnet, dass** die Abstützbuchse (14) einteilig ausgebildet ist.

7. Servolenkung nach einem der Ansprüche 1 bis 5, **dadurch gekennzeichnet, dass** die Abstützbuchse (14) mehrteilig ausgebildet ist.

8. Servolenkung nach Anspruch 7, **dadurch gekennzeichnet, dass** die Abstützbuchse (14) wenigstens ein Einlegeteil (14b) zum Einsetzen in das die Lenkstange (3) umgebende Gehäuse (1) und eine Abstützbacke (14a) zum Einsetzen in das Einlegeteil (14b) aufweist.

9. Servolenkung nach einem der Ansprüche 1 bis 5, **dadurch gekennzeichnet, dass** die Abstützbuchse (14) mit dem Gehäuse (1) einstückig ausgebildet ist.

10. Servolenkung nach Anspruch 9, **dadurch gekennzeichnet, dass** die Abstützbuchse (14) durch einen Teilbereich des Gehäuses (1) gebildet ist.

11. Servolenkung nach Anspruch 9 oder 10, **dadurch gekennzeichnet, dass** die Kurvenkontur durch Drehen in die Innenfläche des Gehäuses (1) eingebracht ist.

12. Servolenkung nach einem der Ansprüche 1 bis 11, **dadurch gekennzeichnet, dass** die Abstützbuchse (14) aus einem verschleißfesten Material gebildet ist.

13. Abstützbuchse nach einem der Ansprüche 1 bis 12 für eine Servolenkung eines Kraftfahrzeugs, welche eine Lenkstange mit einem Spindelabschnitt aufweist, die zusammen mit einer drehbar gelagerten Kugelumlaufmutter ein Kugelmutter-Spindel-Getriebe bildet.

## Claims

1. Power steering system for a motor vehicle having a housing, in which a steering rod is held in an axially movable manner, the steering rod having a spindle section which, together with a rotatably mounted recirculating ball nut, forms a ball and nut spindle gear mechanism, a supporting bush (14) being formed between an axial end (3a) of the steering rod (3) and the recirculating ball nut (9), which supporting bush (14) provides a through hole (15) for guiding the steering rod (3) through, **characterized in that** that inner face (16) of the supporting bush (14) which faces the steering rod (3) has a curve contour such that the opening cross section of the through hole (15) is enlarged in the direction of the end (3a) of the steering rod (3) and the curve contour is adapted to a bending line of the steering rod (3) in such a way that, when the steering rod (3) makes contact with the supporting bush (14) on account of a bending load, the said steering rod (3) bears flatly against the curve contour of the said supporting bush (14).

2. Power steering system according to Claim 1, **characterized in that** the curve contour is adapted to an extreme bending line of the steering rod (3), which extreme bending line is set in the case of a maximum permissible, radial force effect on the end (3a) of the steering rod (3).

3. Power steering system according to Claim 2, **characterized in that** the through hole (15) of the supporting bush (14) and the arrangement of the supporting bush (14) between the recirculating ball nut (9) and the end (3a) of the steering rod (3) are selected in such a way that the steering rod (3) bears flatly against the curve contour of the supporting bush (14) only when the extreme bending line is reached.

4. Power steering system according to Claim 1, 2 or 3, **characterized in that** the through hole (15) of the supporting bush (14) has an additional radius at the inlet and/or outlet, which additional radius is smaller than the radius of the curve contour.

5. Power steering system according to one of Claims 1 to 4, **characterized in that** the through hole (15) opens in a funnel-shaped manner in the direction of the end (3a) of the steering rod (3).

6. Power steering system according to one of Claims 1 to 5, **characterized in that** the supporting bush (14) is configured in one piece.

7. Power steering system according to one of Claims 1 to 5, **characterized in that** the supporting bush (14) is configured in multiple pieces.

8. Power steering system according to Claim 7, **characterized in that** the supporting bush (14) has at least one insert part (14b) for insertion into the housing (1) which surrounds the steering rod (3) and a supporting jaw (14a) for insertion into the insert part (14b).

9. Power steering system according to one of Claims 1 to 5, **characterized in that** the supporting bush (14) is configured in one piece with the housing (1).

10. Power steering system according to Claim 9, **characterized in that** the supporting bush (14) is formed by a part region of the housing (1).

11. Power steering system according to Claim 9 or 10, **characterized in that** the curve contour is introduced by being turned into the inner face of the housing (1).

12. Power steering system according to one of Claims 1 to 11, **characterized in that** the supporting bush (14) is formed from a wear-resistant material.

13. Supporting bush according to one of Claims 1 to 12 for a power steering system of a motor vehicle which has a steering rod with a spindle section, which steering rod, together with a rotatably mounted recirculating ball nut, forms a ball and nut spindle gear mechanism.

## Revendications

1. Direction assistée pour un véhicule automobile, comprenant un boîtier dans lequel une barre de direction est maintenue de manière axialement mobile, la barre de direction comprenant une section de broche qui forme, conjointement avec un écrou à recirculation de billes monté rotatif, une transmission à écrou à billes et à broche, une douille d'appui (14) étant réalisée entre une extrémité axiale (3a) de la barre de direction (3) et l'écrou à recirculation de billes (9), laquelle douille d'appui fournit un alésage traversant (15) pour le passage de la barre de direction (3), **caractérisée en ce que** la surface intérieure (16), tournée vers la barre de direction (3), de la douille d'appui (14) présente un contour courbe, de telle sorte que la section transversale d'ouverture de l'alésage traversant (15) soit agrandie en direction de l'extrémité (3a) de la barre de direction (3) et que le contour courbe soit adapté à une courbe de flexion de la barre de direction (3) de telle sorte que la barre de direction (3) s'applique à plat contre le contour courbe de la douille de support lorsqu'elle vient en contact avec la douille de support (14) en raison d'une sollicitation de flexion.

2. Direction assistée selon la revendication 1, **caractérisée en ce que** le contour courbe est adapté à une courbe de flexion extrême de la barre de direction (3) qui survient sous l'action d'une force radiale maximale admissible sur l'extrémité (3a) de la barre de direction (3).

3. Direction assistée selon la revendication 2, **caractérisée en ce que** l'alésage traversant (15) de la douille d'appui (14) et l'agencement de la douille d'appui (14) entre l'écrou à circulation de billes (9) et l'extrémité (3a) de la barre de traction (3) sont choisis de telle sorte que la barre de traction (3) ne s'applique à plat contre le contour courbe de la douille d'appui (14) que lorsque la courbe de flexion extrême est atteinte.

4. Direction assistée selon la revendication 1, 2 ou 3, **caractérisée en ce que** l'alésage traversant (15) de la douille d'appui (14) présente à l'entrée et/ou à la sortie un rayon supplémentaire qui est inférieur au rayon du contour courbe.

5. Direction assistée selon l'une quelconque des revendications 1 à 4, **caractérisée en ce que** l'alésage traversant (15) s'ouvre en forme d'entonnoir en direction de l'extrémité (3a) de la barre de direction (3).

6. Direction assistée selon l'une quelconque des revendications 1 à 5, **caractérisée en ce que** la douille d'appui (14) est réalisée en une seule partie.

7. Direction assistée selon l'une quelconque des revendications 1 à 5, **caractérisée en ce que** la douille d'appui (14) est réalisée en plusieurs parties.

8. Direction assistée selon la revendication 7, **caractérisée en ce que** la douille d'appui (14) comprend au moins une pièce d'insertion (14b) destinée à être insérée dans le boîtier (1) entourant la barre de direction (3) et une mâchoire d'appui (14a) destinée à être insérée dans la pièce d'insertion (14b).

9. Direction assistée selon l'une quelconque des revendications 1 à 5, **caractérisée en ce que** la douille d'appui (14) est réalisée d'un seul tenant avec le boîtier (1).

10. Direction assistée selon la revendication 9, **caractérisée en ce que** la douille d'appui (14) est formée par une région partielle du boîtier (1).

11. Direction assistée selon la revendication 9 ou 10, **caractérisée en ce que** le contour courbe est ménagé par tournage dans la surface intérieure du boîtier (1).

12. Direction assistée selon l'une quelconque des revendications 1 à 11, **caractérisée en ce que** la douille d'appui (14) est formée d'un matériau résistant à l'usure.

13. Douille d'appui selon l'une quelconque des revendications 1 à 12 pour une direction assistée d'un véhicule automobile, laquelle comprend une barre de direction pourvue d'une section de broche qui, conjointement avec un écrou à recirculation de billes monté rotatif, forme une transmission à écrou à billes et à broche.
